# EUROPEAN PATENT SPECIFICATION

(11) **EP 3 511 474 B1**
(45) Date of publication and mention of the grant of the patent: **11.08.2021**
(21) Application number: 17848140.4
(22) Date of filing: 06.09.2017
(51) Int. Cl.: E03D 1/32, F16K 21/18

(54) **SIDE WATER INLET VALVE AND TOILET**
SEITLICHES WASSEREINLASSVENTIL UND TOILETTE
SOUPAPE D'ENTRÉE LATÉRALE D'EAU ET TOILETTES

(30) Priority: 06.09.2016 CN 201621038800 U
(43) Date of publication of application: 17.07.2019
(73) Proprietor: Xiamen R&T Plumbing Technology Co., Ltd., Xiamen, Fujian 361028 (CN)
(72) Inventor: ZHANG, Fengrong, Xiamen Fujian 361028 (CN); ZHANG, Zulian, Xiamen Fujian 361028 (CN); ZHONG, Zhijun, Xiamen Fujian 361028 (CN)
(74) Representative: Caldon, Giuliano
(86) International application number: PCT/CN2017/100725
(87) International publication number: WO 2018/045967

(56) References cited:
- CN-A- 104 633 211
- CN-A- 105 544 672
- CN-U- 201 794 135
- CN-U- 206 128 222
- CN-Y- 2 658 492
- FR-A1- 2 933 111
- US-A- 1 321 673
- US-A- 4 108 202
- US-A- 4 108 202

## Description

### FIELD OF THE INVENTION

The invention relates to the field of sanitary ware, in particular to a side water inlet valve and a flush toilet comprising such a valve.

### DESCRIPTION OF THE RELATED ART

The overall appearance design and function design of an existing side water inlet valve are performed according to the requirements of product function, water route design, size of common parts such as water stop pad, water inlet joint, and the like. In order to meet the uniform wall thickness requirements of injection molded parts, the existing side water inlet valve usually has a rigid structural feature in appearance, and the space for appearance beautifying design is limited, which leads to certain limitations in the appearance design of the side water inlet valve, thereby affecting the beauty of the product. Moreover, the appearance structure of the existing side water inlet valve is complicated and the associative perception is poor.

Documents US 1,321,673 and US 4,108,202 disclose known water inlet valves comprising a water inlet body provided with a water inlet channel, a water outlet pipe provided with a water outlet channel, and an outer sleeve pipe arranged so that a water flow channel is formed between the outer wall of the water inlet body and the inner wall of the outer sleeve pipe, through which the water inlet channel is in communication with the water outlet channel. On the other hand, functional improvements of these known valve are possible.

### SUMMARY OF THE INVENTION

An object of the invention is to provide a side water inlet valve and a flush toilet, which overcome defects of the prior art, and technical solutions adopted by the invention to solve technical problems thereof are as follows.

According to one aspect of the application, a side water inlet valve is provided, comprising a water inlet body provided with a water inlet channel, and a water outlet pipe provided with a water outlet channel, wherein, an outer sleeve pipe in communication with the water outlet pipe is fixed at the end of the water outlet pipe, and the water inlet body is sleeve coupled in the outer sleeve pipe from an opening at one end of the outer sleeve pipe, such that the water inlet body and the outer sleeve pipe are sleeve coupled and engaged. The water inlet body and the outer sleeve pipe are detachable, and a water flow channel is formed between the outer wall of the water inlet body and the inner wall of the outer sleeve pipe, through which the water inlet channel is in communication with the water outlet channel.

Alternatively, the water outlet pipe is longitudinally disposed to form a longitudinal water outlet channel. The outer sleeve pipe is laterally fixed to the top end of the water outlet pipe, and a water outlet of the water flow channel is disposed on the side wall of the outer sleeve pipe. The top end of the water outlet pipe is correspondingly disposed at the water outlet of the water flow channel, such that the water outlet channel is in communication with the water outlet of the water flow channel. The water inlet body is laterally sleeve coupled into the outer sleeve pipe to form a lateral water inlet channel. A circumferential water flow channel is formed between the outer wall of the inlet water body and the inner wall of the outer sleeve pipe, and the water inlet channel, the water flow channel and the water outlet channel form a T-shaped water passage.

Alternatively, two seal grooves are arranged at the outer wall of the water inlet body circumferentially at intervals, and are respectively placed with a seal ring. The two seal rings are sealingly disposed between the outer wall of the water inlet body and the inner wall of the outer sleeve pipe, and define the axial range of the water flow channel.

Alternatively, the water inlet body is axially limited and sleeve coupled into the outer sleeve pipe, wherein the outer sleeve pipe and the water outlet pipe are integrally formed, or the outer sleeve pipe and the water outlet pipe are separately formed and then fixedly connected to each other.

Alternatively, one end of the water inlet body is provided with a limiting step protruding outwards with the other end an outer thread/outer buckle. When the water inlet body is sleeve coupled into the outer sleeve pipe, the limiting step is axially limited and engaged with the end of the outer sleeve pipe, and the outer thread/outer buckle of the other end of the water inlet body passes through the outer sleeve pipe and engages with a connecting nut/connecting ferrule having an outer diameter larger than that of the outer sleeve pipe. The connecting nut/connecting ferrule is abutted against the end of the outer sleeve pipe, such that the water inlet body is axially limited in the outer sleeve pipe. Also, limit ribs are correspondingly disposed on the outer wall of the water inlet body and the inner wall of the outer sleeve pipe, such that the water inlet body is circumferentially limited in the outer sleeve pipe.

Alternatively, one end of the water inlet body is provided with a limiting step protruding outwards with the other end an outer thread. When the water inlet body is sleeve coupled into the outer sleeve pipe, the limiting step is axially limited and engaged with the end of the outer sleeve pipe, and the outer thread of the other end of the water inlet body passes through the outer sleeve pipe and a water tank body and is in threaded engagement with a locking nut. The locking nut is locked against the outer wall of the water tank body, such that the water inlet body is axially limited in the outer sleeve pipe and fixed to the water tank body together with the outer sleeve pipe. Also, limit ribs are correspondingly disposed on the outer wall of the water inlet body and the inner wall of the outer sleeve pipe, such that the water inlet body is circumferentially limited in the outer sleeve pipe.

According to the application, a water stop assembly capable of opening or closing the water inlet channel is also included. The water stop assembly includes afloat bowl that can move up and down along with the water level of the water tank. The water inlet body is provided with a back-pressure chamber and a pressure relief opening in communication with the back-pressure chamber. The float bowl is, through a threaded rod, linked and engaged with a lifting rod movably arranged on the water inlet body and capable of opening and closing the pressure relief opening.

Alternatively, the threaded rod is engaged and connected with the lifting rod at the outer side of the water inlet body and the outer sleeve pipe, or, the outer sleeve pipe and the water inlet body are each provided with a relief hole, and the threaded rod of the water stop assembly passes through the relief holes and is engaged and connected with the lifting rod above the outer sleeve pipe and the water inlet body.

Alternatively, an air inlet hole in communication with the water flow channel is disposed at the top of the outer sleeve pipe, and the side water inlet valve further comprises an anti-siphon pad capable of opening or closing the air inlet hole, wherein the anti-siphon pad is fixedly connected to an anti-siphon seat.

According to another aspect of the application, a flush toilet is provided, the toilet comprising:
a water tank; and
a side water inlet valve as described above installed on the water tank to replenish the water tank.
Compared with the related art, the technical solution has the advantages as follows:
1. By fixedly arranging an outer sleeve pipe in communication with the water outlet pipe at the end of the water outlet pipe, the water inlet body is sleeve coupled in the outer sleeve pipe from an opening at one end of the outer sleeve pipe, such that the water inlet body and the outer sleeve pipe are sleeve coupled and engaged. The water inlet body and the outer sleeve pipe are detachable, and the water inlet channel of the water inlet body is in communication with the water outlet channel of the water outlet pipe. As such, the outer sleeve pipe is adopted to wrap the water inlet body, such that the structure and appearance of the product are greatly adjusted compared with the existing side water inlet valve, and the appearance of the product is more beautiful, novel and holistic; moreover, some parts of the water inlet body of the existing side water inlet valve may be omitted by the use of the outer sleeve pipe, such that the product is simple in structure and good in assembly manufacturability, thereby achieving the effect of reducing the cost.
2. A water flow channel is formed between the outer wall of the water inlet body and the inner wall of the outer sleeve pipe, through which the water inlet channel is in communication with the water outlet channel. The advantage of such arrangement is that the water route structure in the water inlet body of the existing side water inlet valve can be greatly simplified, and the gap between the outer wall of the water inlet body and the inner wall of the outer sleeve pipe is fully utilized, such that the water route design is more ingenious, simple and novel.
3. By sealingly dispose two seal rings between the outer wall of the water inlet body and the inner wall of the outer sleeve pipe to define the axial range of the water flow channel, the structure is simple and easy to install.
4. The water inlet body further comprises a steering hole for steering the water flow of the water inlet channel, and the anti-siphon seat comprises a seat body which is abutted against the upper end of the steering hole, and two side walls extending downward and longitudinally and movably sleeve coupled outside the steering hole. This arrangement can make full use of the lateral space of the water inlet body, saving the longitudinal space of the water inlet valve and thus reducing the height of the water inlet valve.

### BRIEF DESCRIPTION OF THE DRAWINGS

The drawings described herein are intended to provide a further understanding of the invention, and form a part of the invention, meanwhile the illustrative embodiments of the invention and the description thereof are used to explain the invention and do not constitute an improper limitation to the invention. In the drawing:
Fig. 1 is a perspective view illustrating a side water inlet valve according to the first embodiment of the invention.
Fig. 2 is a cross-sectional view illustrating a side water inlet valve according to the first embodiment of the invention.
Fig. 3 is an exploded view illustrating a side water inlet valve according to the first embodiment of the invention.
Fig. 4 is a perspective view illustrating the engagement of a water outlet pipe and an outer sleeve pipe of a side water inlet valve according to the first embodiment of the invention.
Fig. 5 is a perspective view illustrating a water inlet body of a side water inlet valve according to the first embodiment of the invention.
Fig. 6 is a schematic diagram illustrating the water flow when water flows into a side water inlet valve according to the first embodiment of the invention.
Fig. 7 is a cross-sectional view illustrating the assembly of a water outlet pipe, an outer sleeve pipe and a water inlet body of a side water inlet valve according to the first embodiment of the invention.
Fig. 8 is a perspective view illustrating a side water inlet valve according to the second embodiment of the invention.
Fig. 9 is a partial cross-sectional view illustrating a side water inlet valve according to the third embodiment of the invention.
Fig. 10 is a partial cross-sectional view illustrating a side water inlet valve according to the fourth embodiment of the invention.
Fig. 11 is an exploded view illustrating a water inlet body and an anti-siphon seat of a side water inlet valve according to the fifth embodiment of the invention.
Fig. 12 is a partial cross-sectional view illustrating a side water inlet valve according to the fifth embodiment of the invention.

### DETAILED DESCRIPTION OF THE EMBODIMENTS

The technical solution of the invention will be further described in detail below through the accompanying drawings and embodiments.

Embodiment 1:

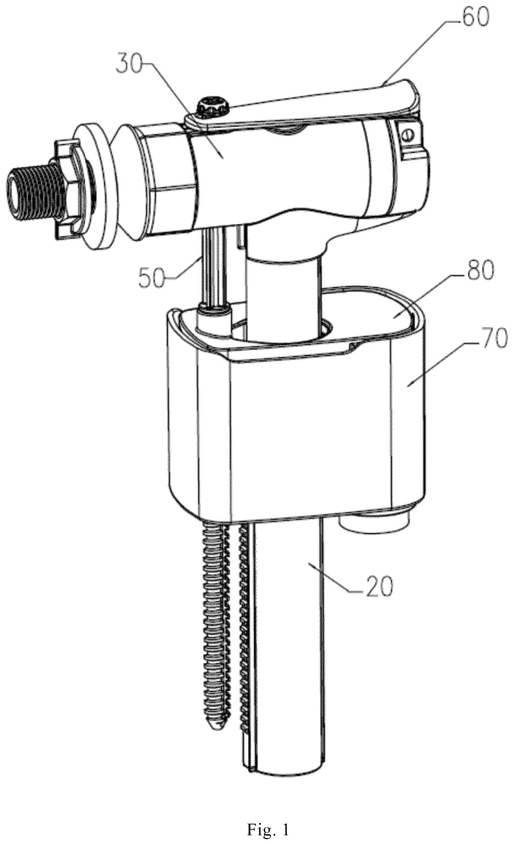

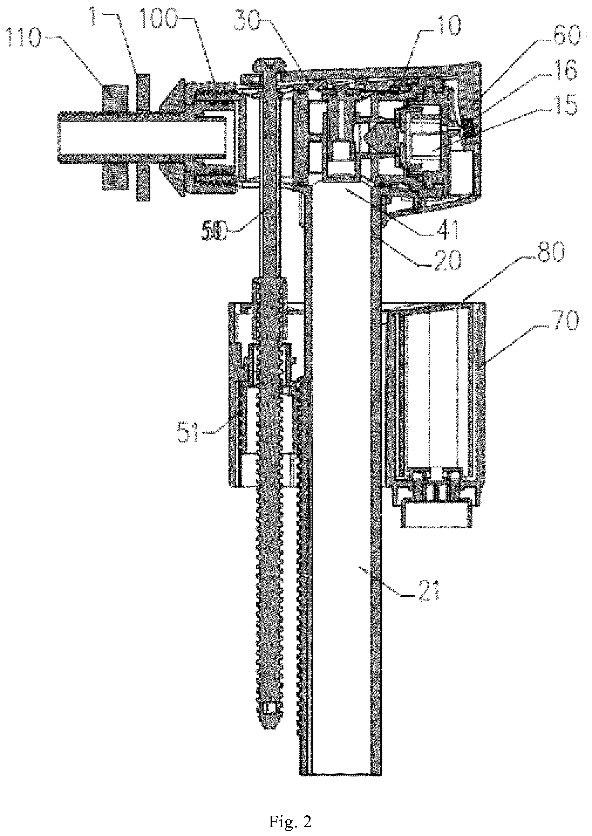

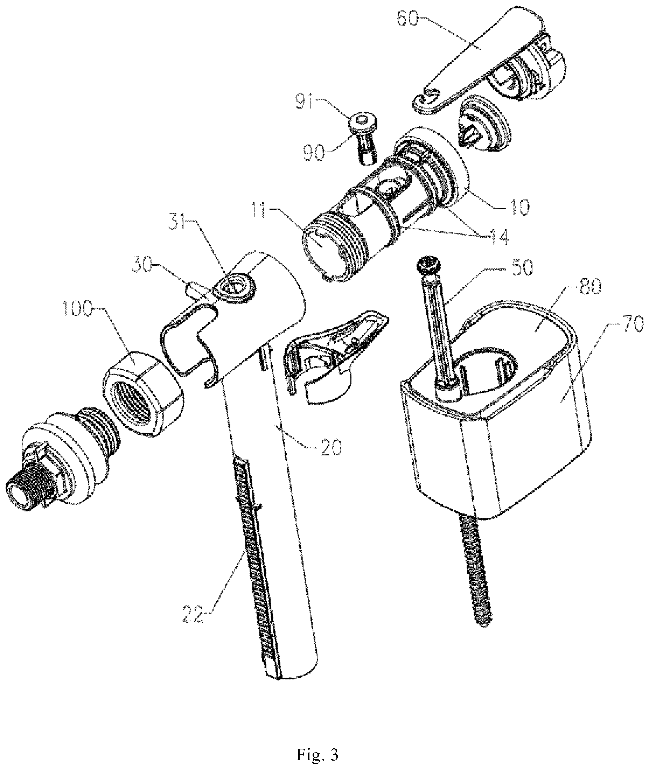

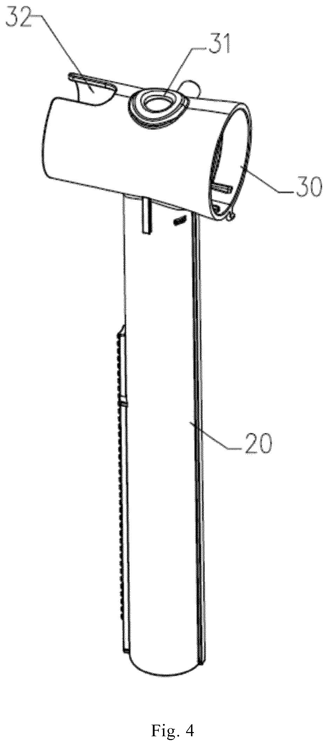

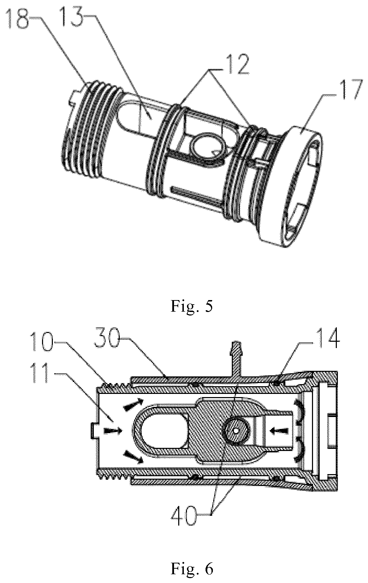

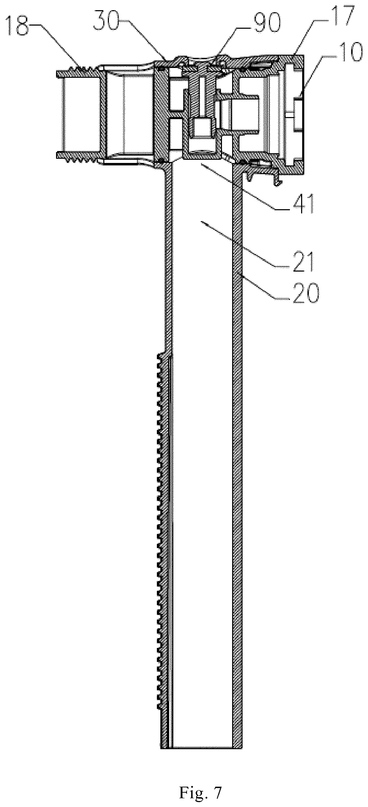

As shown in FIGs. 1 to 7 , a side water inlet valve fixed in a water tank body 1 is provided, comprising: a water inlet body 10 provided with a water inlet channel 11, and a water outlet pipe 20 provided with a water outlet channel 21, wherein, an outer sleeve pipe 30 in communication with the water outlet pipe 20 is fixed at the end of the water outlet pipe 20, and the water inlet body 10 is sleeve coupled into the outer sleeve pipe 30 from an opening at one end of the outer sleeve pipe 30, such that the water inlet body 10 and the outer sleeve pipe 30 are sleeve coupled and engaged. The water inlet body 10 and the outer sleeve pipe 30 are detachable, and the water inlet channel 11 of the water inlet body 10 is in communication with the water outlet channel 21 of the water outlet pipe 20. The water inlet body 10 further comprises a steering hole 19 for steering the water flow of the water inlet channel 11.

In the embodiment, a water flow channel 40 is formed between the outer wall of the water inlet body 10 and the inner wall of the outer sleeve pipe 30, through which the water inlet channel 11 is in communication with the water outlet channel 21. As such, the water route structure in the water inlet body 10 of the existing side water inlet valve can be greatly simplified, and the gap between the outer wall of the water inlet body 10 and the inner wall of the outer sleeve pipe 30 is fully utilized, such that the water route design is more ingenious, simple and novel. Of course, the embodiment may also be such that the inside of the water inlet body 10 itself may be provided with a water flow channel 40 in communication with the water outlet channel 21, which can also achieve the purpose of communicating the water inlet channel 11 with the water outlet channel 21 and no more details will be made here.

In the embodiment, the water outlet pipe 20 is longitudinally disposed to form a longitudinal water outlet channel 21, and the outer sleeve pipe 30 is laterally fixed to the top end of the water outlet pipe 20, and a water outlet 41 of the water flow channel 40 is disposed at the side wall of the outer sleeve pipe 30. Specifically, the water outlet 41 is located at a middle position on the bottom side wall of the outer sleeve pipe 30, and the top end of the water outlet pipe 20 is correspondingly disposed at the water outlet 41 of the water flow channel 40 to communicate the water outlet channel 21 with the water outlet 41 of the water flow channel 40. The water inlet body 10 is laterally sleeve coupled into the outer sleeve pipe 30 to form a lateral water inlet channel 11. A circumferential water flow channel 40 is formed between the outer wall of the water inlet body 10 and the inner wall of the outer sleeve pipe 30. Specifically, the circumferential water flow channel 40 is designed as a full circumferential channel. Of course, if only a water flow channel 40 of half circumference is formed between the outer wall of the water inlet body 10 and the inner wall of the outer sleeve pipe 30, it can also effectively communicate the water inlet channel 11 with the water outlet channel 21, while the other half circumference between the outer wall of the water inlet body 10 and the inner wall of the outer sleeve pipe 30 can be designed as a water replenishing channel communicated with a water replenishing pipe for replenishing water to the flush toilet water seal. In the embodiment, the water inlet channel 11, the water flow channel 40 and the water outlet channel 21 form a T-shaped water passage.

In the embodiment, two seal grooves 12 are disposed at the outer wall of the water inlet body 10 circumferentially at intervals, and are respectively placed with a seal ring 14. The two seal rings 14 are sealingly disposed between the outer wall of the water inlet body 10 and the inner wall of the outer sleeve pipe 30, and define the axial range of the water flow channel 40.

In the embodiment, the water inlet body 10 is axially limited and sleeve coupled into the outer sleeve pipe 30, wherein the outer sleeve pipe 30 and the water outlet pipe 20 are integrally formed, or the outer sleeve pipe 30 and the water outlet pipe 20 are separately formed and then fixedly connected to each other by way of clamping, bonding, welding, or the like. Specifically, in the embodiment, the outer sleeve pipe 30 and the water outlet pipe 20 are integrally formed. The outer sleeve pipe 30 and the water outlet pipe 20 are detachable so as to facilitate the separate manufacture of the outer sleeve pipe 30 and the water outlet pipe 20, thereby simplifying the complexity of the single part, reducing the processing difficulty, and ensuring the processing quality thereof.

In the embodiment, one end of the water inlet body 10 is provided with a limiting step 17 protruding outwards with the other end an outer thread 18. When the water inlet body 10 is sleeve coupled into the outer sleeve pipe 30, the limiting step 17 is axially limited and engaged with the end of the outer sleeve pipe 30, and the outer thread 18 of the other end of the water inlet body 10 passes through the outer sleeve pipe 30 and is in threaded engagement with a connecting nut having an outer diameter larger than that of the outer sleeve pipe 30. The connecting nut 100 is locked against the end of the outer sleeve pipe 30, such that the water inlet body 10 is axially limited in the outer sleeve pipe 30. Also, limit ribs are correspondingly disposed on the outer wall of the water inlet body 10 and the inner wall of the outer sleeve pipe 30, such that the water inlet body 10 is circumferentially limited in the outer sleeve pipe 30, thereby, the water inlet body 10 is limited and fixed in the outer sleeve pipe 30. A locking nut 110 is also included, which is in threaded engagement with a water inlet joint connected to one end of the outer thread 18 of the water inlet body 10 for locking the assembled water inlet body 10, the water outlet pipe 20, and the outer sleeve pipe 30 to the water tank body 1.

In the embodiment, a water stop assembly capable of opening or closing the water inlet channel 11 is also included. The water stop assembly includes a float bowl 80 that can move up and down along with the water level of the water tank, and the float bowl 80 is movably disposed in a small water tank 70 relatively fixed to the water outlet pipe 20. The water inlet body 10 is provided with a back-pressure chamber 15 and a pressure relief opening 16 in communication with the back-pressure chamber 15. The float bowl 80 is, through a threaded rod 50, linked and engaged with a lifting rod 60 movably arranged on the water inlet body 10 and capable of opening and closing the pressure relief opening 16. A threaded sleeve 51 sleeve coupled and engaged with the threaded rod 50 is also included in the embodiment. The threaded sleeve 51 is sleeve coupled outside the threaded rod 50 and rotates synchronously with the threaded rod 50 in the circumferential direction, and movable relative to each other in the axial direction. The small water tank 70 is engaged with the thread 22 on the outer side wall of the water outlet pipe 20 by the threaded sleeve 51 for height adjustment. Specifically, a longitudinally disposed thread 22 is disposed on the water outlet pipe 20 at a position corresponding to the threaded sleeve 51, and the threaded sleeve 51 moves up and down by engaging with the thread 22 to drive the small water tank 70 to move up and down to realize the adjustment of the water level, of which the specific structure belongs to the prior art and no more details will be made here.

In the embodiment, the outer sleeve pipe 30 and the water inlet body 10 are each provided with a relief hole, and the threaded rod 50 of the water stop assembly passes through the relief holes and is engaged and connected with the lifting rod 60 of the water stop assembly above the outer sleeve pipe 30 and the water inlet body 10. Specifically, a first relief hole 32 is disposed at one end of the outer sleeve pipe 30, and a second relief hole 13 is disposed at the corresponding position of the water inlet body 10, and the threaded rod passes through the first relief hole 32 and the second relief hole 13 respectively and is engaged and connected with the lifting rod 60.

In the embodiment, an air inlet hole 31 in communication with the water flow channel 40 is disposed at the top of the outer sleeve pipe 30, and an anti-siphon pad 91 capable of opening or closing the air inlet hole 31 is also included. Specifically, an anti-siphon seat 90 is movably disposed in the water inlet body 10, and the anti-siphon pad 91 is fixed on the anti-siphon seat 90. When water flows into the side water inlet valve, the water pressure pushes the anti-siphon seat 90 such that the anti-siphon pad 91 closes the air inlet hole 31, thereby preventing the water flow from escaping from the air inlet hole 31. When a negative pressure occurs in the water inlet channel 11, the anti-siphon seat 90 falls under its own gravity to drive the anti-siphon pad 91 to open the air inlet hole 31, such that the outside air can enter the water inlet channel 11 to break the negative pressure and prevent the occurrence of the siphon backflow phenomenon.

With the above structure, the structure and appearance of the product are greatly adjusted compared with the existing side water inlet valve, and the appearance of the product is more beautiful, novel and holistic; moreover, some parts of the water inlet body of the existing side water inlet valve may be omitted by the use of the outer sleeve pipe, such that the product is simple in structure and good in assembly manufacturability, thereby achieving the effect of reducing the cost.

According to another aspect of the application, a flush toilet is also provided in the embodiment, wherein the flush toilet includes a water tank and the above-described water inlet valve, wherein the water inlet valve is installed in the water tank for replenishing the water tank.

### Embodiment 2:

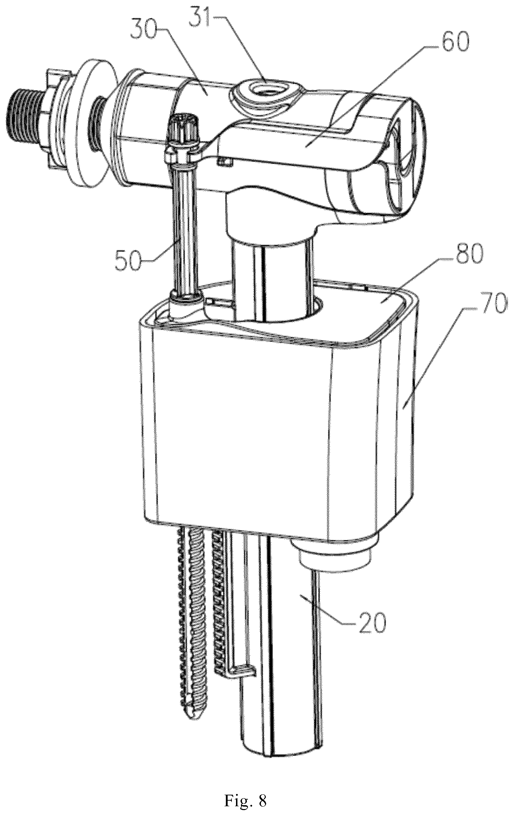

As shown in FIG. 8, the difference between this embodiment and the embodiment 1 is that the threaded rod 50 of the present embodiment is engaged and connected with the lifting rod 60 of the water stop assembly at the outer side of the water inlet body 10 and the outer sleeve pipe 30, as such, no relief hole should be disposed in the outer sleeve pipe 30 and the water inlet body 10. Other portions not described are consistent with the above-described embodiment 1, and no more details will be made here.

### Embodiment 3:

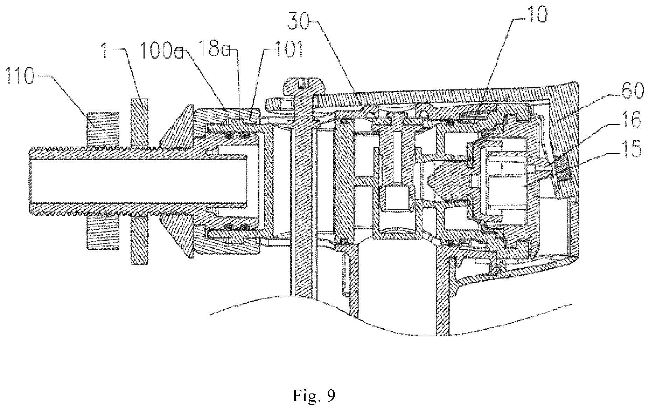

As shown in FIG. 9, the difference between this embodiment and the embodiment 1 is that an outer buckle 18a other than the outer thread 18 is disposed in the water inlet body 10 of the present embodiment, while the connecting nut 100 of the embodiment 1 is changed to a connecting ferrule 100a. A plurality of outer buckles 18a are provided and arranged at intervals on the outer peripheral wall of one end of the water inlet body 10, and a plurality of inner buckles 101 are correspondingly provided and arranged at intervals on the inner peripheral wall of the connecting ferrule 100a. When connecting, the outer buckle 18a is extended into the connecting ferrule 100a from the gap between the inner buckles 101 and then rotated a certain angle, such that the outer buckle 18a is fastened correspondingly to the inner buckle 101 to achieve a fixed connection therebetween. The outer diameter of the connecting ferrule 100a is also larger than that of the outer sleeve pipe 30 such that the connecting ferrule 100a is locked against the end of the outer sleeve pipe 30. The water inlet body 10 is axially limited in the outer sleeve pipe 30 by the clamping engagement of the outer buckle 18a and the connecting ferrule 100a. Other structures not described are consistent with the embodiment 1, and no more details will be made here.

### Embodiment 4:

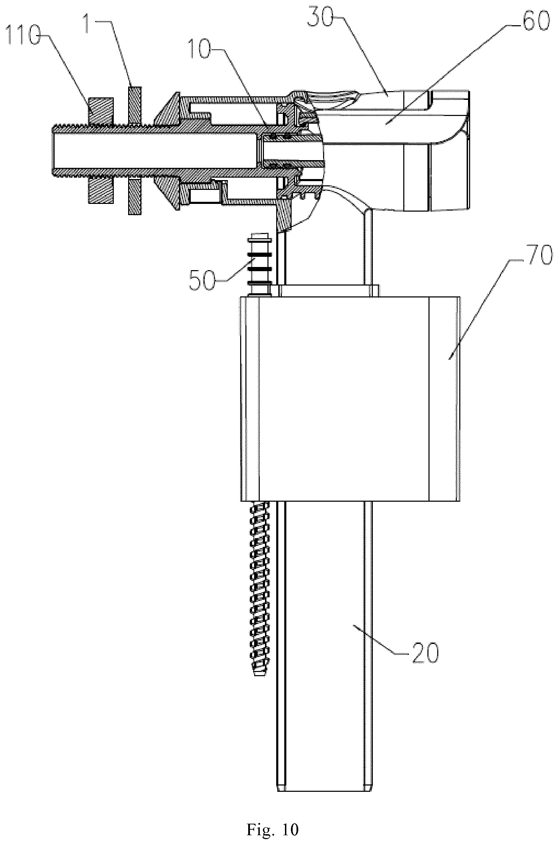

As shown in FIG. 10, the difference between this embodiment and the embodiment 1 is that the connecting nut 100 is not required to be provided in the present embodiment, and with only a locking nut 110, the axial limit to the water inlet body 10 and the outer sleeve pipe 30 is achieved, and the water inlet body 10, the water outlet pipe 20 and the outer sleeve pipe 30 are fixed to the water tank body. Specifically, the water inlet joint provided at one end of the water inlet body is provided with an outer thread, and when the water inlet body 10 is sleeve coupled into the outer sleeve pipe 30, the limiting step 17 at the other end thereof is axially limited and engaged with the end of the outer sleeve pipe. The outer thread on the water inlet joint of the water inlet body 10 passes through mounting holes disposed in the outer sleeve pipe 30 and the water tank body 1 and is in threaded engagement with a locking nut 110. The locking nut 110 is locked against the outer side wall of the water tank body 1 such that the water inlet body 10 is axially limited in the outer sleeve pipe 30 and fixed to the water tank body 1 together with the outer sleeve pipe 30. Also, limit ribs are correspondingly disposed on the outer wall of the water inlet body 10 and the inner wall of the outer sleeve pipe 30, such that the water inlet body 10 is circumferentially limited in the outer sleeve pipe 30, thereby, the water inlet body 10 is limited and fixed in the outer sleeve pipe 30.

Other structures not described in the embodiment are consistent with the embodiment 1, and no more details will be made here.

### Embodiment 5:

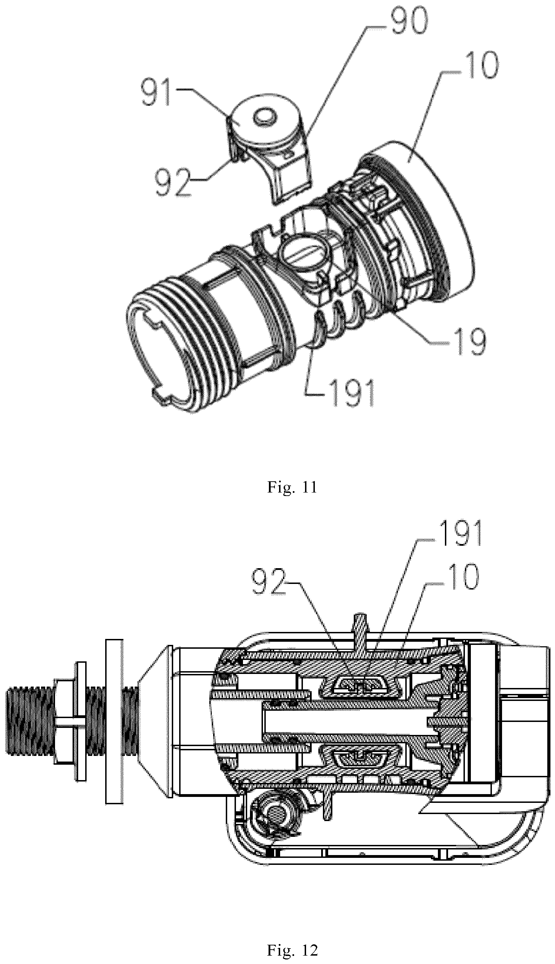

As shown in FIGs. 11 and 12, the difference between this embodiment and the embodiment 1 is that, in the present embodiment, the anti-siphon seat 90 includes a seat body which is abutted against the steering hole 19, and two side walls extending downward and longitudinally and movably sleeve coupled outside the steering hole 19. Specifically, guiding grooves 92 are disposed on the inner sides of the two side walls, and guiding ribs 191 are disposed on the outer wall of the steering hole 19, and the guiding grooves 92 and the guiding ribs 191 are plug-in engaged with each other, such that the anti-siphon seat 90 can be longitudinally and movably sleeve coupled outside the steering hole 19.

## Claims

1. A side water inlet valve comprising a water inlet body (10) provided with a water inlet channel (11), and a water outlet pipe (20) provided with a water outlet channel (21), wherein, an outer sleeve pipe (30) in communication with the water outlet pipe (20) is fixed at an end of the water outlet pipe (20), and the water inlet body (10) is sleeve coupled in the outer sleeve pipe (30) from an opening at one end of the outer sleeve pipe (30), such that the water inlet body (10) and the outer sleeve pipe (30) are sleeve coupled and engaged, and the water inlet body (10) and the outer sleeve pipe (30) are detachable, and a water flow channel (40) is formed between the outer wall of the water inlet body (10) and the inner wall of the outer sleeve pipe (30), through which the water inlet channel (11) is in communication with the water outlet channel (21);
the side water inlet valve further comprises a water stop assembly capable of opening or closing the water inlet channel (11), wherein the water stop assembly includes a float (80) that can move up and down along with the water level of the water tank, and the water inlet body (10) is provided with a back-pressure chamber (15) and a pressure relief opening (16) in communication with the back-pressure chamber (15), and the float (80) is, through a threaded rod (50), linked and engaged with a lifting rod (60) movably arranged on the water inlet body (10) and capable of opening and closing the pressure relief opening (16).

2. The side water inlet valve of claim 1, **characterized in that**, the water outlet pipe (20) is longitudinally disposed to form a longitudinal water outlet channel, and the outer sleeve pipe (30) is laterally fixed to a top end of the water outlet pipe (20), and a water outlet of the water flow channel (40) is disposed at a side wall of the outer sleeve pipe (30), and the top end of the water outlet pipe (20) is correspondingly disposed at the water outlet of the water flow channel (40), such that the water outlet channel (21) is in communication with the water outlet of the water flow channel (40), and the water inlet body (10) is laterally sleeve coupled into the outer sleeve pipe (30) to form a lateral water inlet channel, and a circumferential water flow channel is formed between the outer wall of the inlet water body (10) and the inner wall of the outer sleeve pipe (30), and the water inlet channel (11), the water flow channel (40) and the water outlet channel (21) form a T-shaped water passage.

3. The side water inlet valve of claim 2, **characterized in that**, two seal grooves (12) are disposed at the outer wall of the water inlet body (10) circumferentially at intervals, and are respectively placed with a seal ring (14), and the two seal rings (14) are sealingly disposed between the outer wall of the water inlet body (10) and the inner wall of the outer sleeve pipe (30), and define the axial range of the water flow channel (40).

4. The side water inlet valve of claim 1, **characterized in that**, the water inlet body (10) is axially limited by and sleeve coupled into the outer sleeve pipe (30), wherein the outer sleeve pipe (30) and the water outlet pipe (20) are integrally formed, or the outer sleeve pipe (30) and the water outlet pipe (20) are separately formed and then fixedly connected to each other.

5. The side water inlet valve of claim 4, **characterized in that**, one end of the water inlet body (10) is provided with a limiting step (17) protruding outwards with the other end an outer thread/outer buckle (18), and when the water inlet body (10) is sleeve coupled into the outer sleeve pipe (30), the limiting step (17) is axially limited and engaged with the end of the outer sleeve pipe (30), and the outer thread/outer buckle (18) of the other end of the water inlet body (10) passes through the outer sleeve pipe (30) and engages with a connecting nut/connecting ferrule (100) having an outer diameter larger than that of the outer sleeve pipe (30), and the connecting nut/connecting ferrule (100) is abutted against the end of the outer sleeve pipe (300), such that the water inlet body (10) is axially limited in the outer sleeve pipe (30), and in addition, limit ribs are correspondingly disposed on the outer wall of the water inlet body (10) and the inner wall of the outer sleeve pipe (30), such that the water inlet body (10) is circumferentially limited in the outer sleeve pipe (30).

6. The side water inlet valve of claim 4, **characterized in that**, one end of the water inlet body (10) is provided with a limiting step (17) protruding outwards with the other end an outer thread/outer buckle (18), and when the water inlet body (10) is sleeve coupled into the outer sleeve pipe (30), the limiting step (17) is axially limited and engaged with the end of the outer sleeve pipe (30), and the outer thread (18) of the other end of the water inlet body (10) is suitable for passing through the outer sleeve pipe (30) and a water tank body (1) and is in threaded engagement with a locking nut (110), and the locking nut (110) for being locked against the outer wall of the water tank body (1), such that the water inlet body (10) is axially limited in the outer sleeve pipe (30) and fixed to the water tank body (1) together with the outer sleeve pipe (30), and in addition, limit ribs are correspondingly disposed on the outer wall of the water inlet body (10) and the inner wall of the outer sleeve pipe (30), such that the water inlet body (10) is circumferentially limited in the outer sleeve pipe (30).

7. The side water inlet valve of claim 1, **characterized in that**, the threaded rod (50) is engaged and connected with the lifting rod (60) at the outer side of the water inlet body (10) and the outer sleeve pipe (30), or, the outer sleeve pipe (30) and the water inlet body (10) are each provided with a avoidance hole, and the threaded rod (50) of the water stop assembly passes through the avoidance holes and is engaged and connected with the lifting rod (60) above the outer sleeve pipe (30) and the water inlet body (10).

8. The side water inlet valve of claim 1, **characterized in that**, an air inlet hole (31) in communication with the water flow channel (40) is disposed at the top of the outer sleeve pipe (30), and the side water inlet valve further comprises an anti-siphon pad (91) capable of opening or closing the air inlet hole (31), wherein the anti-siphon pad (91) is fixedly connected to an anti-siphon seat (90).

9. A flush toilet, **characterized in that**, comprising:
a water tank; and
the side water inlet valve of claim 1 installed in the water tank to replenish the water tank.

## Patentansprüche

1. Seitliches Wassereinlassventil, das einen mit einem Wassereinlasskanal (11) ausgestatteten Wassereinlasskörper (10) und ein mit einem Wasserauslasskanal (21) ausgestattetes Wasserablassrohr (20) umfasst, bei dem ein mit dem Wasserauslassrohr (20) verbundenes äußeres Manschettenrohr (30) an einem Ende des Wasserauslassrohrs (20) befestigt ist und der Wassereinlasskörper (10) in dem äußeren Manschettenrohr (30) von einer Öffnung an einem Ende des äußeren Manschettenrohrs (30) her muffengekoppelt ist, so dass der Wassereinlasskörper (10) und das äußere Manschettenrohr (30) muffengekoppelt sind und sich miteinander im Eingriff befinden, und der Wassereinlasskörper (10) und das äußere Manschettenrohr (30) lösbar sind und sich ein Wasserstromkanal (40) zwischen der Außenwand des Wassereinlasskörpers (10) und der Innenwand des äußeren Manschettenrohrs (30) bildet, über den der Wassereinlasskanal (11) mit dem Wasserauslasskanal (21) verbunden ist;
das seitliche Wassereinlassventil umfasst außerdem eine Wasserstoppbaugruppe, die geeignet ist, den Wassereinlasskanal (11) zu öffnen oder zu schließen, wobei die Wasserstoppbaugruppe einen Schwimmer (80) einschließt, der sich zusammen mit dem Wasserstand des Wasserbehälters auf und ab bewegen kann, und der Wassereinlasskörper (10) mit einer Gegendruckkammer (15) und einer mit der Gegendruckkammer (15) verbundenen Druckenlastungsöffnung (16) ausgestattet ist, und der Schwimmer (80) ist über eine Gewindestange (50) mit einer Hebestange (60) verbunden und befindet sich mit dieser im Eingriff, die beweglich auf dem Wassereinlasskörper (10) angeordnet und geeignet ist, die Druckentlastungsöffnung (16) zu öffnen und zu schließen.

2. Seitliches Wassereinlassventil nach Anspruch 1, **dadurch gekennzeichnet, dass** das Wasserauslassrohr (20) längs angeordnet ist, um einen länglichen Wasserauslasskanal zu bilden, und das äußere Manschettenrohr (30) seitlich an einem oberen Ende des Wasserauslassrohrs (20) befestigt ist und ein Wasserauslass des Wasserstromkanals (40) an einer Seitenwand des äußeren Manschettenrohrs (30) angeordnet ist und das obere Ende des Wasserauslassrohrs (20) entsprechend am Wasserauslass des Wasserstromkanals (40) angeordnet ist, so dass der Wasserauslasskanal (21) mit dem Wasserauslass des Wasserstromkanals (40) verbunden ist und der Wassereinlasskörper (10) seitlich in dem äußeren Manschettenrohr (30) muffengekoppelt ist, um einen seitlichen Wassereinlasskanal zu bilden, und ein umlaufender Wasserstromkanal zwischen der Außenwand des Wassereinlasskörpers (10) und der Innenwand des äußeren Manschettenrohrs (30) gebildet wird, und der Wassereinlasskanal (11), der Wasserstromkanal (40) und der Wasserauslasskanal (21) einen t-förmigen Wasserdurchgang bilden.

3. Seitliches Wassereinlassventil nach Anspruch 2, **dadurch gekennzeichnet, dass** zwei Dichtungsnuten (12) an der Außenwand des Wassereinlasskörpers (10) umlaufend in Abständen angeordnet und jeweils mit einem Dichtungsring (14) platziert sind, und die beiden Dichtungsringe (14) abdichtend zwischen der Außenwand des Wassereinlasskörpers (10) und der Innenwand des äußeren Manschettenrohrs (30) angeordnet sind und den axialen Bereich des Wasserstromkanals (40) definieren.

4. Seitliches Wassereinlassventil nach Anspruch 1, **dadurch gekennzeichnet, dass** der Wassereinlasskörper (10) axial von dem äußeren Manschettenrohr (30) begrenzt wird und darin muffengekoppelt ist, wobei das äußere Manschettenrohr (30) und das Wasserauslassrohr (20) aus einem Stück geformt sind oder das äußere Manschettenrohr (30) und das Wasserauslassrohr (20) getrennt geformt und dann fest miteinander verbunden werden.

5. Seitliches Wassereinlassventil nach Anspruch 4, **dadurch gekennzeichnet, dass** ein Ende des Wassereinlasskörpers (10) mit einer nach außen vorstehenden Begrenzungsstufe (17) ausgestattet ist und das andere Ende mit einem Außengewinde/Außenring (18) ausgestattet ist, und wenn der Wassereinlasskörper (10) in das äußere Manschettenrohr (30) muffengekoppelt ist, die Begrenzungsstufe (17) axial begrenzt ist und sich mit dem Ende des äußeren Manschettenrohrs (30) in Eingriff befindet, und das Außengewinde/der Außenring (18) des anderen Endes des Wassereinlasskörpers (10) durch das äußere Manschettenrohr (30) verläuft und mit einer Verbindungsmutter/Verbindungszwinge (100) mit einem größeren Außendurchmesser als der des äußeren Manschettenrohrs (30) in Eingriff gelangt und die Verbindungsmutter/Verbindungszwinge (100) gegen das Ende des äußeren Manschettenrohrs (30) anschlägt, so dass der Wassereinlasskörper (10) axial in dem äußeren Manschettenrohr (30) begrenzt wird und außerdem Begrenzungsrippen entsprechend an der Außenwand des Wassereinlasskörpers (10) und der Innenwand des äußeren Manschettenrohr (30) angeordnet werden, so dass der Wassereinlasskörper (10) umlaufend in dem äußeren Manschettenrohr (30) begrenzt ist.

6. Seitliches Wassereinlassventil nach Anspruch 4, **dadurch gekennzeichnet, dass** ein Ende des Wassereinlasskörpers (10) mit einer nach außen vorstehenden Begrenzungsstufe (17) ausgestattet ist und das andere Ende mit einem Außengewinde/Außenring (18) ausgestattet ist, und wenn der Wassereinlasskörper (10) in das äußere Manschettenrohr (30) muffengekoppelt ist, die Begrenzungsstufe (17) axial begrenzt ist und sich mit dem Ende des äußeren Manschettenrohrs (30) in Eingriff befindet, und das Außengewinde (18) des anderen Endes des Wassereinlasskörpers (10) geeignet ist, durch das äußere Manschettenrohr (30) und einen Wassertankkörper (1) zu verlaufen, und sich in Gewindeeingriff mit einer Sicherungsmutter (110) und der Sicherungsmutter (110) zum Sichern gegen die Außenwand des Wassertankkörpers (1) befindet, so dass der Wassereinlasskörper (10) axial in dem äußeren Manschettenrohr (30) begrenzt und an dem Wassertankkörper (1) zusammen mit dem äußeren Manschettenrohr (30) befestigt ist, und zusätzlich Begrenzungsrippen entsprechend an der Außenwand des Wassereinlasskörpers (10) und an der Innenwand des äußeren Manschettenrohrs (30) angeordnet sind, so dass der Wassereinlasskörper (10) umlaufend in dem äußeren Manschettenrohr (30) begrenzt ist.

7. Seitliches Wassereinlassventil nach Anspruch 1, **dadurch gekennzeichnet, dass** die Gewindestange (50) sich mit der Hebestange (60) an der Außenseite des Wassereinlasskörpers (10) und des äußeren Manschettenrohrs (30) in Eingriff befindet und mit dieser gekuppelt ist, oder das äußere Manschettenrohr (30) und der Wassereinlasskörper (10) jeweils mit einer Umgehungsöffnung ausgestattet sind und die Gewindestange (50) der Wasserstoppbaugruppe durch die Umgehungsöffnungen verläuft und sich mit der Gewindestange (60) über dem äußeren Manschettenrohr (30) und dem Wassereinlasskörper (10) in Eingriff befindet und mit dieser gekuppelt ist.

8. Seitliches Wassereinlassventil nach Anspruch 1, **dadurch gekennzeichnet, dass** eine mit dem Wasserstromkanal (40) verbundene Lufteinlassöffnung (31) an der Oberseite des äußeren Manschettenrohrs (30) angeordnet ist und das seitliche Wassereinlassventil außerdem ein Geruchsverschlusspad (91) umfasst, das geeignet ist, die Lufteinlassöffnung (31) zu öffnen oder zu schließen, wobei das Geruchsverschlusspad (91) fest mit einem Geruchsverschlusssitz (90) verbunden ist.

9. Toilette, **dadurch gekennzeichnet, dass** sie Folgendes umfasst:
einen Wasserbehälter; und
das seitliche Wassereinlassventil aus Anspruch 1, das in dem Wasserbehälter installiert ist, um den Wasserbehälter wieder aufzufüllen.

## Revendications

1. Soupape d'entrée latérale d'eau comprenant un corps d'entrée d'eau (10) pourvu d'un canal d'entrée d'eau (11), et un tuyau de sortie d'eau (20) pourvu d'un canal de sortie d'eau (21), où un tuyau de manchon externe (30) en communication avec le tuyau de sortie d'eau (20) est fixé au niveau d'une extrémité du tuyau de sortie d'eau (20), et le corps d'entrée d'eau (10) est couplé par manchon dans le tuyau de manchon externe (30) d'une ouverture au niveau d'une extrémité du tuyau de manchon externe (30), de manière à ce que le corps d'entrée d'eau (10) et le tuyau de manchon externe (30) soient couplés par manchon et engagés, et le corps d'entrée d'eau (10) et le tuyau de manchon externe (30) sont détachables, et un canal d'écoulement d'eau (40) est formé entre la paroi externe du corps d'entrée d'eau (10) et la paroi interne du tuyau de manchon externe (30), par lequel le canal d'entrée d'eau (11) est en communication avec le canal de sortie d'eau (21) ;
la soupape d'entrée latérale d'eau comprend en outre un ensemble d'arrêt d'eau capable d'ouvrir ou de fermer le canal d'entrée d'eau (11), où l'ensemble d'arrêt d'eau comprend un flotteur (80) qui peut monter ou descendre avec le niveau de l'eau du réservoir d'eau, et le corps d'entrée d'eau (10) est pourvu d'une chambre de contre-pression (15) et une ouverture de décompression (16) en communication avec la chambre de contre-pression (15), et le flotteur (80) est, à travers une tige filetée (50), lié et engagé avec une tige de levage (60) disposée de manière mobile sur le corps d'entrée d'eau (10) et capable d'ouvrir et de fermer l'ouverture de décompression (16).

2. Soupape d'entrée latérale d'eau selon la revendication 1, **caractérisée en ce que**, le tuyau de sortie d'eau (20) est disposé longitudinalement pour former un canal de sortie d'eau longitudinal, et le tuyau de manchon externe (30) est fixé latéralement à une extrémité supérieure du tuyau de sortie d'eau (20), et une sortie d'eau du canal d'écoulement d'eau (40) est disposée au niveau d'une paroi latérale du tuyau de manchon externe (30), et l'extrémité supérieure du tuyau de sortie d'eau (20) est disposée en conséquence au niveau de la sortie d'eau du canal d'écoulement d'eau (40), de manière à ce que le canal de sortie d'eau (21) est en communication avec la sortie d'eau du canal d'écoulement d'eau (40), et le corps d'entrée d'eau (10) est couplé latéralement par manchon dans le tuyau de manchon externe (30) pour former un canal d'entrée latéral d'eau, et un canal d'écoulement d'eau circonférentiel est formé entre la paroi externe du corps d'entrée d'eau (10) et la paroi interne du tuyau de manchon externe (30), et le canal d'entrée d'eau (11), le canal d'écoulement d'eau (40) et le canal de sortie d'eau (21) forment un passage d'eau en forme de T.

3. Soupape d'entrée latérale d'eau selon la revendication 2, **caractérisée en ce que**, deux rainures d'étanchéité (12) sont disposées au niveau de la paroi externe du corps d'entrée d'eau (10) circonférentiellement à intervalles, et sont placées respectivement dans une bague d'étanchéité (14), et les deux bagues d'étanchéité (14) sont disposées de manière étanche entre la paroi externe du corps d'entrée d'eau (10) et la paroi interne du tuyau de manchon externe (30), et définissent la portée axiale du canal d'écoulement d'eau (40).

4. Soupape d'entrée latérale d'eau selon la revendication 1, **caractérisée en ce que**, le corps d'entrée d'eau (10) est limité axialement et couplé par manchon dans le tuyau de manchon externe (30), où le tuyau de manchon externe (30) et le tuyau de sortie d'eau (20) sont formés intégralement, ou le tuyau de manchon externe (30) et le tuyau de sortie d'eau (20) sont formés séparément et ensuite reliés de manière fixe l'un à l'autre.

5. Soupape d'entrée latérale d'eau selon la revendication 4, **caractérisée en ce que**, une extrémité du corps d'entrée d'eau (10) est pourvue d'un cran de limitation (17) faisant saillie vers l'extérieur et l'autre extrémité est pourvue d'un filetage externe/une boucle externe (18), et lorsque le corps d'entrée d'eau (10) est couplé par manchon dans le tuyau de manchon externe (30), le cran de limitation (17) est limitée axialement et engagée avec l'extrémité du tuyau de manchon externe (30), et le filetage externe/la boucle externe (18) de l'autre extrémité du corps d'entrée d'eau (10) passe à travers le tuyau de manchon externe (30) et s'engage avec un écrou de raccordement/une virole de raccordement (100) ayant un diamètre externe supérieur à celui d'un tuyau de manchon externe (30), et l'écrou de raccordement/la virole de raccordement (100) vient en butée contre l'extrémité du tuyau de manchon externe (30), de manière à ce que le corps d'entrée d'eau (10) est limité axialement dans le tuyau de manchon externe (30), et en outre, des nervures de limitation sont disposées en conséquence sur la paroi externe du corps d'entrée d'eau (10) et la paroi interne du tuyau de manchon externe (30), de manière à ce que le corps d'entrée d'eau (10) est limité de manière circonférentielle dans le tuyau de manchon externe (30).

6. Soupape d'entrée latérale d'eau selon la revendication 4, **caractérisée en ce que**, une extrémité du corps d'entrée d'eau (10) est pourvue d'un cran de limitation (17) faisant saillie vers l'extérieur et l'autre extrémité est pourvue d'un filetage externe/une boucle externe (18), et lorsque le corps d'entrée d'eau (10) est couplé par manchon dans le tuyau de manchon externe (30), le cran de limitation (17) est limitée axialement et engagée avec l'extrémité du tuyau de manchon externe (30), et le filetage externe (18) de l'autre extrémité du corps d'entrée d'eau (10) est approprié pour passer à travers le tuyau de manchon externe (30) et un corps de réservoir d'eau (1) et est en engagement fileté avec un écrou de blocage (110), et l'écrou de blocage (110) pour être bloqué contre la paroi externe du corps de réservoir d'eau (1), de manière à ce que le corps d'entrée d'eau (10) est limité axialement dans le tuyau de manchon externe (30) et fixé au corps de réservoir d'eau (1) conjointement avec le tuyau de manchon externe (30), et en outre, des nervures de limitation sont disposées en conséquence sur la paroi externe du corps d'entrée d'eau (10) et la paroi interne du tuyau de manchon externe (30), de manière à ce que le corps d'entrée d'eau (10) est limité de manière circonférentielle dans le tuyau de manchon externe (30).

7. Soupape d'entrée latérale d'eau selon la revendication 1, **caractérisée en ce que**, la tige filetée (50) est engagée et reliée à la tige de levage (60) au côté externe du corps d'entrée d'eau (10) et le tuyau de manchon externe (30), ou, le tuyau de manchon externe (30) et le corps d'entrée d'eau (10) sont chacun pourvu d'un trou d'évasion, et la tige filetée (50) de l'ensemble d'arrêt d'eau passe à travers les trous d'évasion et est engagé et relié avec la tige de levage (60) au-dessus du tuyau de manchon externe (30) et le corps d'entrée d'eau (10).

8. Soupape d'entrée latérale d'eau selon la revendication 1, **caractérisée en ce que**, un trou d'entrée d'air (31) en communication avec le canal d'écoulement d'eau (40) est disposé au sommet du tuyau de manchon externe (30), et la soupape d'entrée latérale d'eau comprend en outre un rembourrage anti-siphon (91) capable d'ouvrir ou de fermer le trou d'entrée d'air (31), où le rembourrage anti-siphon (91) est relié de manière fixe à un siège anti-siphon (90).

9. Chasse d'eau, **caractérisée en ce qu'**elle comprend :
un réservoir d'eau ; et
la soupape d'entrée latérale d'eau selon la revendication 1 installée dans le réservoir d'eau pour réapprovisionner le réservoir d'eau.
